# EUROPEAN PATENT SPECIFICATION

(11) **EP 1 080 639 B1**
(45) Date of publication and mention of the grant of the patent: **16.07.2003**
(21) Application number: 00306816.0
(22) Date of filing: 10.08.2000
(51) Int. Cl.: A01K 85/00, A01K 85/12

(54) **Fin for fish bait**
Finne für Fischköder
Aileron pour leurre de pêche

(30) Priority: 13.08.1999 GB 9919249
(43) Date of publication of application: 07.03.2001
(73) Proprietor: Fox Design International Limited, Chelmsford, Essex CM3 8HQ (GB)
(72) Inventor: Fox, Clifford Royston, Chelmsford, Essex CM3 8HQ (GB); Cottis, Maxwell Stewart, Braintree, Essex CM7 9FD (GB)
(74) Representative: Crouch, David John

(56) References cited:
- FR-A- 2 625 867
- GB-A- 2 304 018
- US-A- 5 146 707

## Description

The present invention relates to a swim feeder.

One such feeder is disclosed in GB-2,304,018A. This comprises a central body and a plurality of fins surrounding the central body which are secured by means of ties.

A disadvantage of this construction is that it is relatively cumbersome to manufacture.

The present invention seeks to obviate this disadvantage.

Accordingly, the present invention is directed to a swim feeder comprising fins to which bait may be attached when the feeder is in use and one or more retaining parts to which the fins are readily retainably but releasably attached by means of slots provided in the said one or more retaining parts to receive portions of the fins, in which the slots are shaped in section to receive the said portions of the fins which are correspondingly shaped in section, the slots in section having a wider width on the inside.

The slots may each be blind at one end to provide an abutment for the fin portions to reduce the likelihood that the fins will fall out for example on casting. The slots may be shaped to receive corresponding shaped parts of the fins. The slots may be dovetailed or keyhole-shaped.

Each fin may be releasably held by two spaced-apart parts of the feeder. The or one of the parts to which the fins are releasably attached may comprise a leadweight.

The feeder may further comprise a spacer which extends between the leadweight and respective portions of the fins to inhibit movement of the fins within the slots.

A number of parts comprising respective different leadweights of different size and weight may be provided as a set from which the user may select one, the fins being readily retainably but releasably attached to any of those parts. Additionally, a number of different spacers of different sizes may be provided as a set, each spacer being designed for use with one or more of the leadweights constituting the set of leadweights.

The leadweight may have a bore extending through it to enable it to be attached in the feeder with its centre of gravity substantially on the fishing line.

A tube may extend through the bore. The tube may be of a yieldable material, for example rubber. The tube may accommodate a line link which can be pulled out of the tube in the event that the line breaks, so that the fin does not then tow the feeder around with it indefinitely.

An example of a feeder made in accordance with the present invention is illustrated in the accompanying drawings, in which:
- Figure 1: shows a side view of a leadweight of the example feeder;
- Figure 2: shows a view from one end of the leadweight shown in Figure 1;
- Figure 3: shows a view from the other end of the leadweight shown in Figure 1;
- Figure 4: shows a side view of a stem and tube combination of the example feeder;
- Figure 5: shows a side view of a fin of the example feeder;
- Figure 6: shows a side view of a tip of the example feeder;
- Figure 7: shows a side view of a further part of the example feeder;
- Figure 8: shows a view from one end of the part shown in Figure 7;
- Figure 9: shows a view from the other end of the part shown in Figure 7;
- Figure 10: shows a side view of an additional further part of the example feeder;
- Figure 11: shows a side view of the assembled example feeder with one fin absent for clarity;
- Figure 12: shows a view from one end of the feeder shown in Figure 11;
- Figure 13: shows a view from the other end of the feeder shown in Figure 11.

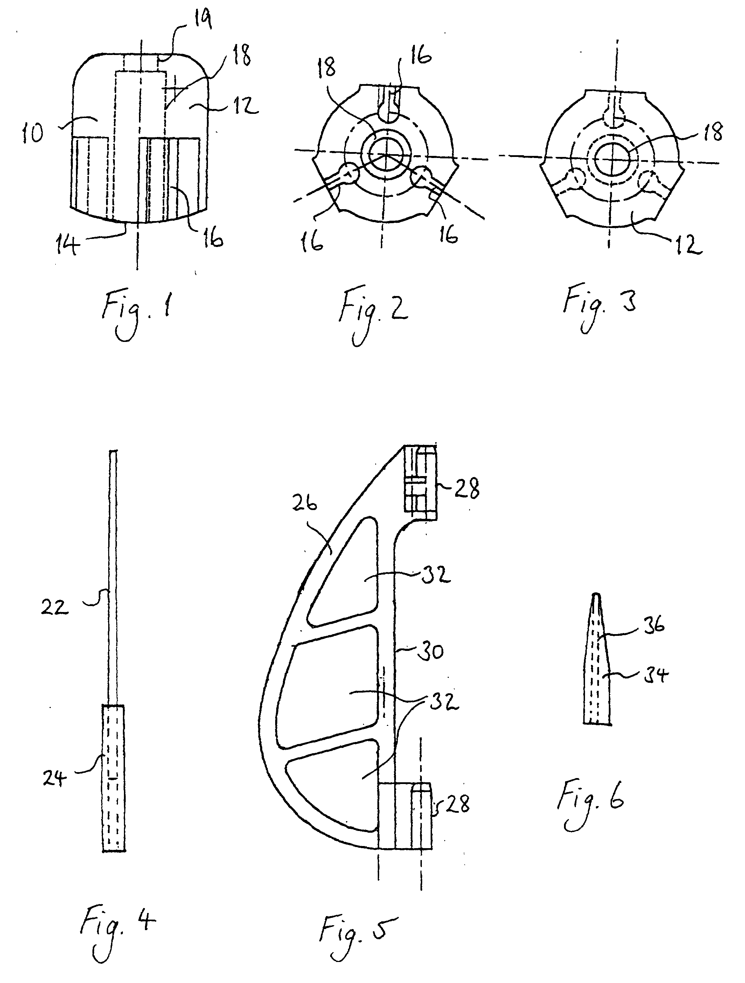

The leadweight 10 shown in Figures 1 to 3 comprises a generally cylindrical body 12 which is slightly convex at one end 14 and is provided with three slots 16 (one of which is visible in Figure 1), which extend inwardly from the circumference of the body 12 towards the axis thereof, which slots are open at the convex end 14 of the weight 12 and which extend only in that half of the weight 10 which includes the convex end 14, to provide abutments at their ends further from the convex end 14 of the weight. The three slots 16 are spaced apart around the axis of the body 12 with uniform angular spacing. The slots are keyhole-shaped in section with the wider width on the inside. The weight is provided with a throughbore 18 along its axis, which is of reduced diameter at one of its ends 19.

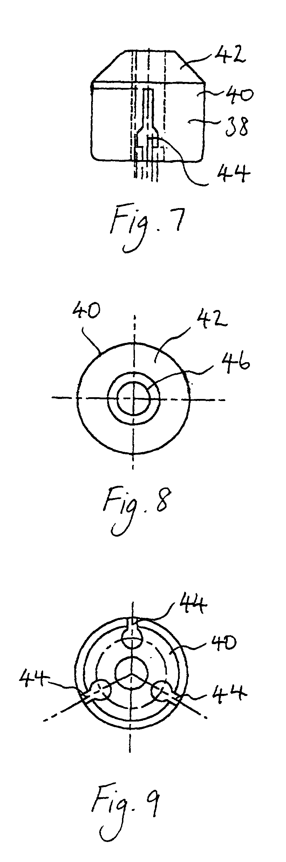

Figure 4 shows a plastics stem 22 which is tubular, and, surrounding one end of that stem 22, a rubber sleeve 24 which is also tubular and which fits snugly around the outside of the stem 22.

The sleeve 24 can extend within the bore 18 as a close fit, and the stem 22 can extend through the narrowed end 19 of the bore 18 as a close fit.

Figure 5 shows a fin of hard plastics material 26 which has a straight edge 28 having a recessed portion 30, the upper and lower portions of the fin defining this straight edge and being keyhole-shaped in section to fit in the associated slots of the weight 10 and a part yet to be described. The fin has a frame-like construction to provide apertures 32. This facilitates the attachment of bait to the fin when the feeder is in use.

Figure 6 shows an elongate rubber tip 34 which is provided with a throughbore 36 having a diameter corresponding to the external diameter of the stem 22.

A plastics retaining part 38 is shown in Figure 7 which has a generally cylindrical body 40 and a slightly tapered end 42. Three keyhole-shaped slots 44 (only one of which is visible in Figure 7) extend inwardly from the circumference of the cylindrical body 40 towards the axis thereof, and extend from that end of the body 40 further from the tapered end 42 to a position adjacent to that tapered end. The retaining part 38 is also provided with a throughbore 46 along its axis.

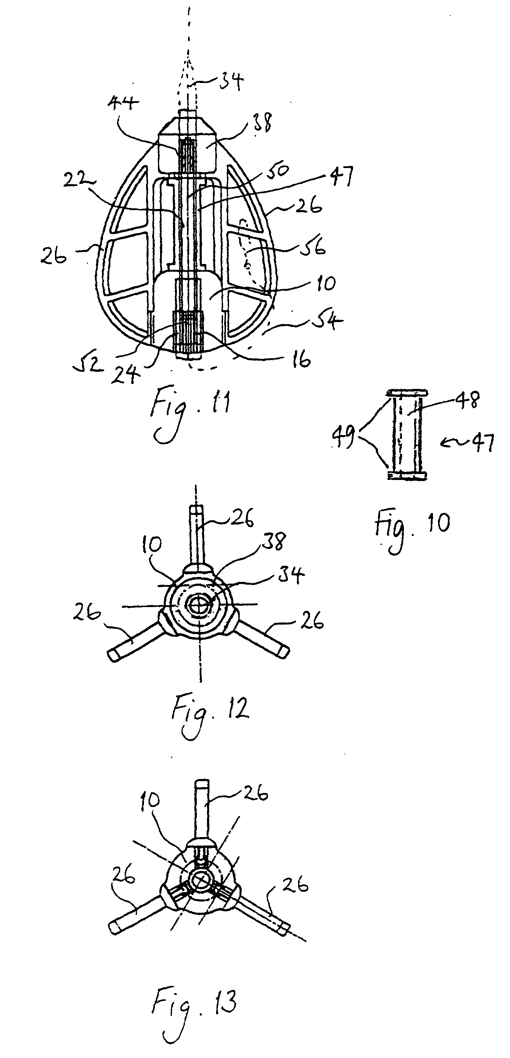

Figure 10 shows an elongate plastics spacer 47, possibly made by injection moulding, which has a tubular structure with a central bore 48, and flanges 49 extending circumferentially at either end.

The parts shown in Figures 1 to 10 are assembled together to create the in-line swim feeder as shown in Figures 11 to 13. Thus, the stem 22 is threaded through the throughbore 18 of the leadweight 10 so that the rubber sleeve 24 is received in the throughbore 18. The spacer 47 is slid onto the stem 22 via its central bore 48 so that a first of the flanges 49 abuts the non-convex end of the leadweight 10. The retaining part 38 is also slid on to the stem 22 with its tapered end 42 further from the weight 10. Three fins, each as shown in Figure 5, are then inserted with their keyhole-sectioned edges 28 received in slots 16 and 44 of the weight 10 and the retaining part 38 respectively. The upper parts of the fins (26) extend beyond the non-tapered end of the retaining part (38) and abut the second flange 49 of the spacer 47. The spacer thus extends between the leadweight 10 and the upper parts of the fins 26 and thereby keeps them braced in positions relative to each other to inhibit the fins 26 from moving within the slots 16 of the leadweight 10. Finally, the tip 34 is threaded on to the end of the stem 22 further from the sleeve 24. The resulting construction shown in Figures 11 to 13, in which the fins 26 (only two of which are shown in Figure 10 for clarity) are releasably held in slots 16 and 44 of the weight 10 and the retaining part 38 respectively.

When the assembled feeder is prepared for use, a fishing line 50 from a rod (not shown) is threaded through the stem 22 and coupled to a link 52 which is inserted in the sleeve 24. A hook line 54 extends from the link 52 back to a hook 56 which may be embedded in bait which is also attached to the fins 26.

In the event that a fish is caught by the hook 56 and then subsequently breaks the line 50, so that the fish is now free, in time the fins 26 will become snagged by tree roots for example, and the link 52 with a remaining part of the line 50 will be pulled from the sleeve 24. In this way, the fish will be able to free itself from the feeder.

Numerous variations and modifications to the present construction will occur to the reader without taking the resulting construction clear of the present invention.

For example, the slots 16 and 44 and the portions of the fins 26 which engage those slots may be dovetailed instead of keyhole-shaped.

It will also be appreciated that longer or shorter leadweights 10 may be used, of different respective weights and indeed a set of such weights may be taken with the user who may select any one of the weights appropriate for the fishing conditions he finds himself in. The longer weights are accommodated in the recesses 30.

The stem 22 and tube 24 may, if the feeder is not intended to be an in-line feeder, be replaced by a wire on to which is moulded a plastics portion to be received in the weight 10.

## Claims

1. A swim feeder comprising fins (26) to which bait may be attached when the feeder is in use and one or more retaining parts (10, 40) to which the fins (26) are readily retainably but releasably attached by means of slots (16, 44) provided in the said one or more retaining parts (10, 40) to receive portions of the fins (26), **characterised in that** the slots (16) are shaped in section to receive the said portions of the fins (26) which are correspondingly shaped in section, the slots in section having a wider width on the inside.

2. A swim feeder according to claim 1, **characterised in that** the slots (16, 44) are each blind at one end to provide an abutment for the fin portions to reduce the likelihood that the fins (26) will fall out for example on casting.

3. A swim feeder according to claim 2, **characterised in that** the slots (16, 44) are dovetail-shaped in section.

4. A swim feeder according to claim 1 or claim 2, **characterised in that** the slots (16, 44) are keyhole-shaped in section.

5. A swim feeder according to any preceding claim, **characterised in that** each fin (26) is releasably held by two spaced-apart parts (10, 40) of the feeder.

6. A swim feeder according to any preceding claim, **characterised in that** the or one of the parts (10) to which the fins (26) are releasably attached comprise a leadweight.

7. A swim feeder according to claim 6, **characterised in that** it further comprises a spacer (47) which extends between the leadweight (10) and respective portions of the fins (26) to inhibit movement of the fins (26) within the slots (16).

8. A swim feeder according to claim 6 or claim 7, **characterised in that** the leadweight (10) is one of a number of different leadweights of different size and weight constituting a set from which the user may select one, the fins (26) being readily retainably but releasably attached to any one of the set.

9. A swim feeder according to claim 8 read appendant to claim 7, **characterised in that** the spacer is one of a number of different spacers of different sizes constituting a set, each spacer being designed for use with one or more of the leadweights constituting the set of leadweights.

10. A swim feeder according to any one of claims 6 to 9, **characterised in that** the leadweight (10) has a bore (18) extending through it to enable it to be attached in the feeder with its centre of gravity substantially on the fishing line.

11. A swim feeder according to claim 10, **characterised in that** a tube (24) extends through the bore (18).

12. A swim feeder according to claim 11, **characterised in that** the tube (24) is of a yieldable material.

13. A swim feeder according to claim 12, **characterised in that** the yieldable material comprises rubber.

14. A swim feeder according to any one of claims 11 to 13, **characterised in that** the tube (24) can accommodate a line link which can be pulled out of the tube (24) in the event that the line breaks, so that the fish does not then tow the feeder around with it indefinitely.

## Patentansprüche

1. Schwimm-Anfüttergerät mit Finnen (26), an denen Köder befestigt werden kann, wenn das Anfüttergerät in Gebrauch ist, und einem oder mehreren Halteteilen (10, 40), an denen die Finnen (26) mittels Schlitzen (16, 44), die in dem einen oder den mehreren Halteteilen (10, 40) vorgesehen sind, um Teile der Finnen (26) aufzunehmen, leicht festhaltbar aber lösbar befestigt sind, **dadurch gekennzeichnet, dass** die Schlitze (16) im Profil geformt sind, die Teile der Finnen (26) aufzunehmen, welche im Profil entsprechend geformt sind, wobei die Schlitze im Profil innen eine größere Breite haben.

2. Schwimm-Anfüttergerät nach Anspruch 1, **dadurch gekennzeichnet, dass** die Schlitze (16, 44) jeweils an einem Ende blind sind, um ein Widerlager für die Finnenteile bereitzustellen, um die Wahrscheinlichkeit zu vermindern, dass die Finnen (26) zum Beispiel beim Wurf herausfallen.

3. Schwimm-Anfüttergerät nach Anspruch 2, **dadurch gekennzeichnet, dass** die Schlitze (16, 44) im Profil schwalbenschwanzförmig sind.

4. Schwimm-Anfüttergerät nach Anspruch 1 oder Anspruch 2, **dadurch gekennzeichnet, dass** die Schlitze (16, 44) im Profil schlüssellochförmig sind.

5. Schwimm-Anfüttergerät nach einem vorhergehenden Anspruch, **dadurch gekennzeichnet, dass** jede Finne (26) von zwei im Abstand voneinander befindlichen Teilen (10, 40) des Anfüttergerätes lösbar festgehalten wird.

6. Schwimm-Anfüttergerät nach einem vorhergehenden Anspruch, **dadurch gekennzeichnet, dass** das Teil oder eines der Teile (10), an denen die Finnen (26) lösbar befestigt sind, ein Bleigewicht aufweist.

7. Schwimm-Anfüttergerät nach Anspruch 6, **dadurch gekennzeichnet, dass** es weiterhin einen Abstandshalter (47) aufweist, der sich zwischen dem Bleigewicht (10) und entsprechenden Teilen der Finnen (26) erstreckt, um eine Bewegung der Finnen (26) innerhalb der Schlitze (16) zu vermeiden.

8. Schwimm-Anfüttergerät nach Anspruch 6 oder Anspruch 7, **dadurch gekennzeichnet, dass** das Bleigewicht (10) eines aus einer Anzahl von verschiedenen Bleigewichten von verschiedener Größe und verschiedenem Gewicht ist, die einen Satz bilden, aus dem der Benutzer eines auswählen kann, wobei die Finnen (26) leicht festhaltbar aber lösbar an einem Bleigewicht des Satzes befestigt werden.

9. Schwimm-Anfüttergerät nach Anspruch 8, zu Anspruch 7 zugehörig gelesen, **dadurch gekennzeichnet, dass** der Abstandshalter einer aus einer Anzahl von verschiedenen Abstandshaltern von verschiedenen Größen ist, die einen Satz bilden, wobei jeder Abstandshalter zur Verwendung mit einem oder mehreren der Bleigewichte, die den Satz Bleigewichte bilden, gestaltet ist.

10. Schwimm-Anfüttergerät nach einem der Ansprüche 6 bis 9, **dadurch gekennzeichnet, dass** das Bleigewicht (10) eine Bohrung (18) hat, die sich dadurch hindurch erstreckt, damit es mit seinem Schwerpunkt im wesentlichen auf der Angelschnur im Anfüttergerät befestigt werden kann.

11. Schwimm-Anfüttergerät nach Anspruch 10, **dadurch gekennzeichnet, dass** sich ein Rohr (24) durch die Bohrung (18) erstreckt.

12. Schwimm-Anfüttergerät nach Anspruch 11, **dadurch gekennzeichnet, dass** das Rohr (24) aus einem nachgiebigen Material ist.

13. Schwimm-Anfüttergerät nach Anspruch 12, **dadurch gekennzeichnet, dass** das nachgiebige Material Gummi aufweist.

14. Schwimm-Anfüttergerät nach einem der Ansprüche 11 bis 13, **dadurch gekennzeichnet, dass** das Rohr (24) eine Schnurverbindung aufnehmen kann, die im Falle, dass die Schnur reißt, aus dem Rohr (24) gezogen werden kann, so dass der Fisch das Anfüttergerät dann nicht auf unbestimmte Zeit mit sich schleppt.

## Revendications

1. Un leurre de pêche comprenant des ailerons (26), sur lesquels des hameçons peuvent être fixés lorsque le leurre est en utilisation, et une ou plusieurs parties de retenue (10, 40) auxquelles les ailerons (26) sont susceptibles d'être fixés aisément mais de façon détachable à l'aide de fentes (16, 44) ménagées dans lesdites une ou plusieurs parties de retenue (10, 40) pour recevoir des parties des ailettes (26), **caractérisé en ce que** les fentes (16) ont une section profilée pour recevoir lesdites parties des ailettes (26) qui sont de section profilée de manière correspondante, les fentes ménagées dans la section ayant une largeur supérieure sur le côté intérieur.

2. Un leurre de pêche selon la revendication 1, **caractérisé en ce que** les fentes (16, 44) sont chacune borgnes à une extrémité, pour fournir un effet de butée pour les parties d'ailette afin de réduire le risque que les ailettes (26) s'échappent, par exemple lors du moulage.

3. Un leurre de pêche selon la revendication 2, **caractérisé en ce que** les fentes (16, 44) ont une section transversale en forme de queue d'aronde.

4. Un leurre de pêche selon la revendication 1 ou la revendication 2, **caractérisé en ce que** les fentes (16, 44) ont une section en forme de trou de serrure.

5. Un leurre de pêche selon l'une quelconque des revendications précédentes, **caractérisé en ce que** chaque ailette (26) est maintenue de façon détachable par deux parties (10, 40), espacées l'une de l'autre du leurre.

6. Un leurre de pêche selon l'une quelconque des revendications précédentes, **caractérisé en ce que** l'une ou l'autre des parties (10), auxquelles les ailettes (26) sont fixées de façon détachable, comprend un plomb.

7. Un leurre de pêche selon la revendication 6, **caractérisé en ce qu'**il comprend en outre un élément d'espacement (47) s'étendant entre le plomb (10) et des parties respectives des ailettes (26), afin d'empêcher tout déplacement des ailettes (26) à l'intérieur des fentes (16).

8. Un leurre de pêche selon la revendication 6 ou la revendication 7, **caractérisé en ce que** le plomb (10) est l'un parmi une pluralité de plombs de taille et de poids différents, formant un jeu à partir duquel l'utilisateur peut en sélectionner un, les ailettes (26) étant susceptibles d'être fixées, aisément mais de façon détachable, à l'un quelconque du jeu de plombs.

9. Un leurre de pêche selon la revendication 8, dépendant de la revendication 7, **caractérisé en ce que** l'élément d'espacement est l'un parmi une pluralité d'éléments d'espacement différents ayant des tailles différentes constituant un jeu, chaque élément d'espacement étant conçu pour être utilisé avec un ou plusieurs des plombs formant le jeu de plombs.

10. Un leurre de pêche selon l'une quelconque des revendications 6 à 9, **caractérisé en ce que** le plomb (10) a un perçage (18) s'étendant à travers lui, afin de lui permettre d'être fixé dans le leurre, son centre de gravité étant placé sensiblement sur la ligne de pêche.

11. Un leurre de pêche selon la revendication 10, **caractérisé en ce qu'**un tube (24) s'étend à travers le perçage (18).

12. Un leurre de pêche selon la revendication 11, **caractérisé en ce que** le tube (24) est en matériau déformable.

13. Un leurre de pêche selon la revendication 12, **caractérisé en ce que** le matériau déformable est formé de caoutchouc.

14. Un leurre de pêche selon l'une quelconque des revendications 11 à 13, **caractérisé en ce que** le tube (24) peut supporter une liaison de ligne pouvant être extraite du tube (24) dans la localité où la ligne se rompt, de manière que le poisson ne remorque ensuite pas le leurre avec lui indéfiniment.
